(19) Europäisches Patentamt
European Patent Office
Office européen des brevets

(11) EP 2 373 418 B1

## (12) EUROPÄISCHE PATENTSCHRIFT

(45) Veröffentlichungstag und Bekanntmachung des Hinweises auf die Patenterteilung:
**17.10.2012 Patentblatt 2012/42**

(21) Anmeldenummer: 09799574.0

(22) Anmeldetag: **04.12.2009**

(51) Int Cl.:
*C04B 41/89* (2006.01)    *C22C 1/04* (2006.01)
*C22C 1/08* (2006.01)    *C22C 33/02* (2006.01)
*C04B 41/00* (2006.01)    *F01N 3/00* (2006.01)
*B01J 35/04* (2006.01)    *C04B 38/00* (2006.01)
*C04B 41/52* (2006.01)

(86) Internationale Anmeldenummer:
**PCT/EP2009/066451**

(87) Internationale Veröffentlichungsnummer:
**WO 2010/066649 (17.06.2010 Gazette 2010/24)**

(54) **ZELLULÄRER WERKSTOFF FÜR HOCHTEMPERATURANWENDUNGEN UND VERFAHREN ZU SEINER HERSTELLUNG**

CELLULAR MATERIAL FOR HIGH-TEMPERATURE APPLICATIONS AND METHOD FOR THE PRODUCTION THEREOF

MATÉRIAU CELLULAIRE POUR APPLICATIONS À HAUTE TEMPÉRATURE, ET SON PROCÉDÉ DE FABRICATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **12.12.2008 DE 102008061644**

(43) Veröffentlichungstag der Anmeldung:
**12.10.2011 Patentblatt 2011/41**

(73) Patentinhaber: **Fraunhofer-Gesellschaft zur Förderung der angewandten Forschung e.V.**
**80686 München (DE)**

(72) Erfinder:
• **BÖTTGE, Daniela**
**01309 Dresden (DE)**
• **ADLER, Jörg**
**01662 Meißen (DE)**
• **STANDKE, Gisela**
**019099 Dresden (DE)**

(74) Vertreter: **Rauschenbach, Marion**
**PF 27 01 75,**
**Bienertstrasse 15**
**01172 Dresden (DE)**

(56) Entgegenhaltungen:
**EP-A1- 0 381 063    EP-B1- 0 142 858**
**DE-A1- 1 496 084    DE-A1- 3 735 033**

• **MONTANARO L ET AL: "Ceramic Foams by Powder Processing" JOURNAL OF THE EUROPEAN CERAMIC SOCIETY, ELSEVIER SCIENCE PUBLISHERS, BARKING, ESSEX, GB, Bd. 18, Nr. 9, 1. Januar 1998 (1998-01-01), Seiten 1339-1350, XP004132931 ISSN: 0955-2219**

**Beschreibung**

Die Erfindung bezieht sich auf das Gebiet der Werkstoffwissenschaften und betrifft einen zellulären Werkstoff für Hochtemperaturanwendungen, der beispielsweise für katalytische Hochtemperaturprozesse zum Einsatz kommen kann, und ein Verfahren zu seiner Herstellung.

Zelluläre Werkstoffe oder räumliche Netzwerke (Gerüste) bestehen aus einer räumlichen Matrix aus Stegen oder Platten, welche gelenkig oder starr miteinander verbunden sind. Wie beim Kristallgitter werden diese Werkstoffe durch eine kennzeichnende Zelle mit bestimmten Symmetrieelementen beschrieben. Die einzelne Zelle (Elementarzelle) liegt dabei in einem Größenbereich von Millimetern oder Mikrometern ("Cellular Ceramics: Structure, Manufacturing, Properties and Applications" von Michael Scheffler (Editor), Paolo Colombo (Editor), Wiley-VCH Verlag GmbH & Co. KGaA (1.1 Cellular Solids - Scaling of Properties, Abschnitt 1.1.2 Cellular or "Lattice" Materials von Michael F. Ashby (Seite 4)).

Beispielhaft ist in Figur 1 die Prinzipdarstellung eines zellulären Werkstoffes in Form eines offenzelligen Schaumes dargestellt und in Figur 2 die Prinzipdarstellung der dazugehörigen Elementarzelle. In Figur 4 ist die Prinzipdarstellung eines zellulären Werkstoffes in Form eines Parallelkanalwabenkörpers dargestellt und in Figur 5 die Prinzipdarstellung der dazugehörigen Elementarzelle.

Unter zellulären Werkstoffen sollen im Rahmen dieser Erfindung zwei- und dreidimensionale Werkstoffe mit Zellen, wie offenzellige Schäume, Netzwerke, Waben, Fasergeflechte oder Vliese, verstanden werden.

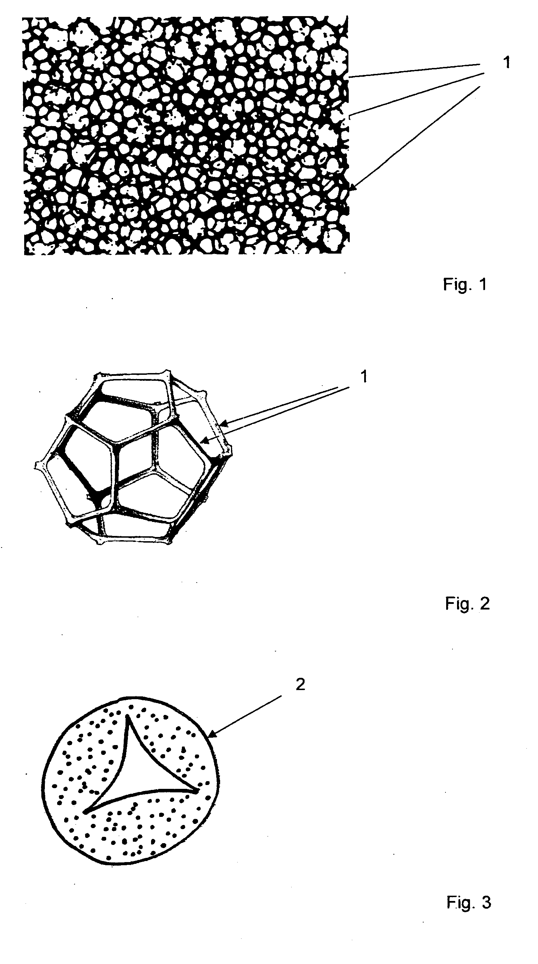

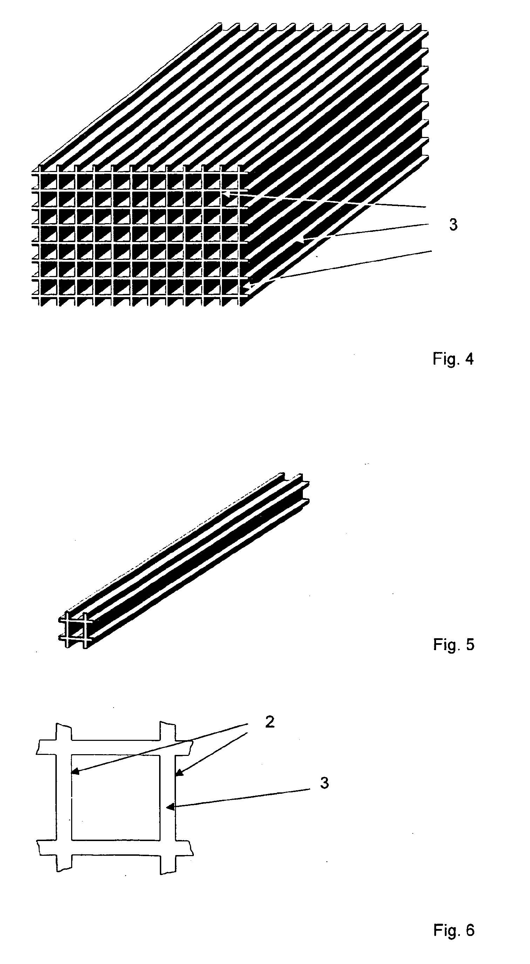

Bei heterogen katalysierten Prozessen, wie beispielsweise katalytischen Verbrennungsreaktionen, spielen sich die entscheidenden Vorgänge an der Oberfläche von Festkörpern ab.
Die umhüllende Oberfläche der den zellulären Werkstoff bildenden Stege oder Platten bildet in ihrer Gesamtheit die geometrische äußere Oberfläche des zellulären Werkstoffes, beispielhaft für einen Schaum in Fig. 3 und einen Wabenkörper in Fig. 6 verdeutlicht. Im Rahmen dieser Erfindung soll dies nachfolgend unter der **umhüllenden Oberfläche** verstanden werden. Diese Oberfläche kann während der Anwendung des zellulären Werkstoffes auch in Wechselwirkung mit einem durchströmenden Medium (einem Gas, einer Flüssigkeit) oder einem weiteren Feststoff treten, z.B. indem eine Beschichtung aufgebracht wird, oder wenn die offenen Zellen des zellulären Werkstoffes mit einer festen Matrix gefüllt sind, wie im Fall der sogenannten Metal-Matrix-Composites (MMC). Dabei kommt den Oberflächeneigenschaften der Stege oder Platten eine besondere Bedeutung zu. Eine Bestimmung der umhüllenden Oberfläche kann z.B. durch Bildauswertung von keramographischen oder metallographischen Anschliffen erfolgen und wird auf das äußere Volumen der Probe oder deren Gewicht bezogen. Unter äußerem Volumen wird dabei das aus den äußeren Abmaßen der Probe berechnete Volumen verstanden.

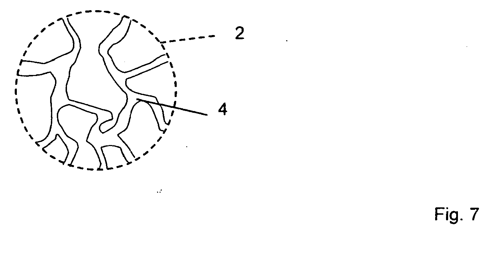

Die üblicherweise über die Gasadsorption bestimmte und auf das Gewicht (oder auch auf das Volumen) einer Probe bezogene, sogenannte **spezifische Oberfläche** ist dagegen die Summe aller durch das Messgas belegbaren Oberfläche des zellulären Werkstoffes, d.h. umfasst sowohl die o.g. umhüllende Oberfläche und die Oberfläche der zugänglichen Risse, Poren und Hohlräume in den Stegen oder Platten, d.h. die spezifische Oberfläche ist immer höher als die umhüllende Oberfläche. Die Bestimmung der spezifischen Oberfläche wird ebenfalls nach bekannten Verfahren durchgeführt, die auch in der DIN ISO 9277 (3003-05) beschrieben sind.
Das Verhältnis der umhüllenden zur spezifischen Oberfläche beträgt bei typischen Katalysatoren Eins zu mehreren Tausend (H. Knözinger, K. Kochloefl, Heterogeneous Catalysis and Solid Catalysts, in: Ullmann's Encyclopedia of Industrial Chemistry, Wiley&Sons, 2008). In Abbildung 7 ist der Sachverhalt am Beispiel eines Pulverpartikels dargestellt. Die umhüllende Oberfläche entspricht dabei in diesem Falle der kugelförmigen Oberfläche des Pulverpartikels. Die innere oder spezifische Oberfläche entspricht der Fläche aller von außen zugänglichen Poren und Oberflächen.

Die Festkörperoberfläche bestimmt wesentlich die Leistungsmerkmale eines Katalysators, wie Aktivität, Selektivität oder Deaktivierungsverhalten. Ein Katalysator ist somit umso aktiver, je mehr katalytisch aktive Oberfläche pro Masse des Katalysators vorhanden ist, je höher also die spezifische Oberfläche ist ("Schlüsseltechnologie der chemischen Industrie - Heterogene Katalyse" von Ferdi Schüth in Chem. Unserer Zeit, 2006, Vol. 40, S. 92-103). Typischerweise wird für katalytische Anwendungen eine spezifische Oberfläche von > 100 $m^2/g$ (z.B. $\gamma$-$Al_2O_3$) gewünscht. Werte für die spezifische Oberfläche können aber auch in Abhängigkeit vom Material sowie der Materialfeinheit mehr als 1000 $m^2/g$ (Aktivkohle, Zeolithe) betragen. Zur Bestimmung der spezifischen Oberfläche wird ein massebezogenes Verfahren eingesetzt und daher erfolgt die Angabe der spezifischen Oberfläche massenbezogen ($S_m$) in $m^2/g$. Diese kann aber leicht über die Materialdichte gemäß der Formel $S_v = \rho_P \cdot S_m$ in die volumenbezogene spezifische Oberfläche in $m^2/m^3$ umgerechnet werden.
Da eine Wirkung der Katalysatoren im wesentlichen an der Oberfläche stattfindet werden diese überwiegend als Beschichtungen auf Träger aufgebracht, um die meistens sehr kostenintensiven Katalysator-Materialien zu sparen und da auch die mechanische Festigkeit der hochporösen Katalysatormaterialien allein nicht ausreichend ist.

In Verbrennungsreaktionen spielen wegen der starken und zum Teil sehr schnellen Erhitzung oder Abkühlung der Materialien auch deren thermomechanischen Eigenschaften eine große Rolle. Darunter wird eine Kombination von thermischem Ausdehnungskoeffizient, Wärmeleitfähigkeit, Hochtemperaturfestigkeit und Elastizitätsmodul verstanden. Bei einer Beschichtung ist vor allem der thermische Ausdehnungskoeffizient von Bedeutung, der möglichst genau an den Ausdehnungskoeffizient des beschichteten Materials, des Trägers der Beschichtung, angepasst sein sollte, um ein Reißen und Ablösen der Schicht bei hohen Temperaturen zu vermeiden. Weiterhin ist auch die Schichtdicke von Bedeutung, da mit der Dicke der Schicht die durch unterschiedliche Wärmedehnung auftretenden Spannungen in dieser zunehmen.

Keramische Werkstoffe besitzen nur begrenzt die Fähigkeit großen und plötzlichen Temperaturänderungen und Gradienten zu widerstehen (Keramik Teil 1: Allgemeine Grundlagen und wichtige Eigenschaften von Salmang, H. und Scholze, H., 6. Auflage, 1982). Diese als Temperaturwechselbeständigkeit (TWB) bezeichnete Eigenschaft wird in DIN 51068 [525] wie folgt beschrieben: "Der Begriff TWB kennzeichnet allgemein das Verhalten gegenüber der wiederholten Einwirkung von Wärmespannungen im veränderlichen Temperaturfeld. Dieses Verhalten wird vom Werkstoffgefüge sowie von Form und Volumen des Erzeugnisses beeinflusst und ist beanspruchungsabhängig."

Durch Temperaturänderungen kommt es zu thermischen Dehnungen im Körper, welche bei Überschreitung der Bruchfestigkeit des Körpers zum Versagen des Bauteils führen. Diese Thermoschockempfindlichkeit kann mittels verschiedener Parameter beschrieben werden, die je nach Randbedingung gültig sind. Für unendlich großen Wärmeübergang gilt:

$$R = \frac{\sigma_z (1 - \mu)}{\alpha E}$$

mit $\sigma_z$ = Bruchfestigkeit, $\mu$ = Querkontraktionszahl, $\alpha$ = Wärmeausdehnungskoeffizient und E = E-Modul des Bauteils ist. Je kleiner R ist desto größer wird die Thermoschockempfindlichkeit. Bei konstantem Wärmeübergang wird die Formel mit der Wärmeleitfähigkeit $\lambda$ erweitert:

$$R´ = \frac{\lambda \sigma_z (1-\mu)}{\alpha E}$$

Demnach sollten Materialien, welche unter thermischen Wechselbedingungen eingesetzt werden, einen möglichst geringen Wärmeausdehnungskoeffizienten und eine hohe Wärmeleitfähigkeit sowie Bruchfestigkeit besitzen. Die meisten der in die Wärmespannungsparameter eingehenden Werte werden durch Poren erniedrigt. Daher sind die im Stand der Technik angegebenen Werte zu einzelnen Stoffen kritisch zu betrachten.

Besonders geeignet sind für derartige Anwendungen SiC, Mullit (Aluminiumsilikat) und Cordierit (Magnesium-Aluminium-Silikat).

Der Einsatz von zellulären Werkstoffen, z.B. von Waben (Parallelkanalmonolithen) und offenzelligen Schäumen als Trägermaterial für katalytische Beschichtungen ist seit langem bekannt. Wegen der hohen Sintertemperaturen, die für die Gewährleistung einer ausreichenden mechanischen Festigkeit benötigt werden, können die keramischen Schäume meistens nicht direkt aus den katalytisch aktiven Komponenten hergestellt werden. (Reitzmann, A., u.a., Chemie Ingenieur Technik 78 (2006) No. 7).

Eine katalytisch wirksame Schicht besteht in der Regel aus einem inerten Material mit einer großen Anzahl sehr feiner Poren (sog. Washcoat oder Support) und dem feinstverteilten katalytischen Material (Katalysator), das aus Partikeln zumeist in nm-Größe besteht. Je feiner diese Partikel sind, desto höher ist deren freie Oberfläche. Der Grund dafür ist, dass die katalytische Aktivität proportional zu der Oberfläche ist, die das katalytische Material aufweist. Dadurch neigt ein feinstverteilter Katalysator bei hohen Temperaturen aber auch zur unerwünschten Vergröberung und Sinterung und damit zu einer Verringerung der katalytischen Aktivität, was in technischen Anwendungen z.B. eine Begrenzung der Lebensdauer des Katalysators verursacht. Für eine Vielzahl von katalytischen Anwendungen wird jedoch eine bestimmte Anzahl von Betriebsstunden, d.h. Langzeitbeständigkeit gefordert. Im Automobilbereich beispielsweise spricht man von ca. 3000 Betriebsstunden, im Kraftwerksbereich können zum Teil mehr als 10000 Betriebsstunden gefordert sein. Über diesen Zeitraum müssen die Katalysatoren eine Mindest-Wirksamkeit aufweisen. Im Falle der vorliegenden Anwendung bezieht sich diese Langzeitstabilität zum einen auf den Erhalt der spezifischen Oberfläche und zum anderen natürlich auch auf die mechanische Stabilität.

Die Langzeitstabilität der spezifischen Oberfläche kann auch dadurch realisiert werden, dass die beschichteten zellulären Werkstoffe bei einer um mindestens 100°C höheren Brenntemperatur gebrannt werden, als sie im späteren Einsatzfalle auftreten.

Das inerte Material des Washcoats wird benötigt, da es einen Kontakt der katalytisch aktiven Partikel untereinander verhindert und somit einer ungünstigen Vergröberung entgegenwirkt. Allerdings ist auch bei hohen Temperaturen, z.B. > 1000°C die Inertheit vieler Washcoat-Materialien begrenzt, d.h. diese versintern ebenfalls. Die Versinterung führt zu einer Verringerung der Porenanzahl und Vergröberung der feinen Poren, wodurch die Oberfläche des Washcoats verringert wird und die darauf verankerten Katalysatorpartikel an zugänglicher Oberfläche einbüßen; d.h. ebenfalls eine Begrenzung der Lebensdauer der katalytisch wirksamen Schicht auftritt. Allgemein können diese Washcoats an sich schon katalytisch aktiv sein oder sie besitzen selbst keine katalytische Aktivität sondern besitzen nur die hohe spezifische Oberfläche. Dann bewirkt diese auf dem zellulären Werkstoff erzeugte hohe spezifische Oberfläche, das darauf im Nachhinein oder in situ katalytisch aktive Substanzen (wie beispielsweise Platin, Mangan usw.) fein dispers und in großer Menge auf dieser Oberfläche verankert werden können. Eine andere Möglichkeit der Wirkung solcher hochporöser Schichten mit hoher spezifischer Oberfläche in chemischen Reaktionen ist die Adsorption von anderen Stoffen oder der Ionentransport, z.B. von Sauerstoff.

Aus der DE 35 40 449 A1 sind ein Keramikschaum und ein Verfahren zu seiner Herstellung bekannt. Der Keramikschaum besteht aus einer dreidimensional vernetzten Keramikstruktur, aus vielen miteinander verbundenen Keramikstegen, wobei die Dichte des Schaumes zwischen 0,4 und 2,0 g/cm$^3$ liegt und die Stege mehrere Keramikschichten aufweisen. Hergestellt wird dieser Keramikschaum, indem eine Keramiksuspension hergestellt wird, der Ausgangsschaum damit mehrmals imprägniert wird, nach jedem Imprägnieren getrocknet wird und danach der Ausgangsschaum ausgebrannt wird. Gemäß dieser Lösung werden zwar Schichten aufgebracht, jedoch dienen diese dem Ziel der Vergrößerung der Stegdicke und damit der Festigkeitserhöhung. Diese Schäume bzw. die aufgebrachten Schichten besitzen keine hohe spezifische Oberfläche. Weiterhin ist beispielsweise im Patent WO 2006/125648 A2 eine Vorrichtung sowie ein Verfahren zur Beschichtung von keramischen Waben oder Metallschäumen mit einem Washcoat bzw. mit katalytisch aktiven Materialien beschrieben sowie der Stand der Technik zur Beschichtung von Substraten mit Washcoats zusammengefasst. Dabei erfolgt die Beschichtung überwiegend durch Tränken der Substrate in der Washcoatsuspension und das Abtrennen der überschüssigen Suspension über Abfließen, Ausblasen oder Zentrifugieren.

Als washcoats wird sehr häufig Gamma-Aluminiumoxid verwendet, welches sich aber bei Temperaturen >1000°C zu Alpha-Aluminiumoxid unter Vergröberung und sehr starker Verringerung der spezifischen Oberfläche umwandelt. Die Verwendung von $\gamma$-Al$_2$O$_3$ ist nach DE 3735033 A1 im Stand der Technik allgemein üblich, weil es eine poröse Struktur hat und deshalb zu einer großen katalytischen Oberfläche führt. $\gamma$-Al$_2$O$_3$ hat jedoch den Nachteil, dass es thermisch nicht stabil ist. Beginnend bei ungefähr 600°C und verstärkt ab 900°C wandelt sich $\gamma$-Al$_2$O$_3$ über Zwischenstufen (Übergangs-Aluminiumoxid) in $\alpha$-Al$_2$O$_3$ um. Bei dieser Umwandlung werden zunehmend Poren des Aluminiumoxidgerüsts geschlossen, so dass es für katalytische Reaktionen nicht mehr zur Verfügung steht und der mit dem Katalysator erzielbare Umsatz kleiner wird. Aus diesem Grund gab es eine Reihe von Bemühungen, die Temperatur, bis zu der ein Katalysator, bei dem katalytisch wirksames Edelmetall an $\gamma$-Al$_2$O$_3$ gebunden ist, betrieben werden kann, zu erhöhen. Dazu wurden Zusätze verwendet, die die Struktur des $\gamma$-Al$_2$O$_3$ stabilisieren sollen (z.B. DE 2339513 C2 DE 3223500 A1, EP 0199509 A2). Bei diesen Zusätzen handelt es sich um gewisse hochtemperaturstabile Metalloxide, z. B. Thoriumoxid, Bariumoxid, Zirkonoxid oder Oxide der Seltenen Erdmetalle. Durch solche Zusätze kann die Umwandlung jedoch nicht verhindert, sondern nur zu etwas höheren Temperaturen verschoben werden.

Alternativ werden z.B. Titanoxid oder Zirkonoxid eingesetzt, jedoch ist es schwierig, solche Materialien mit sehr hoher spezifischer Oberfläche herzustellen oder diese sind bei hohen Temperaturen >1000°C nicht versinterungsresistent.

Bekannt sind Untersuchungen zu substituierten Aluminaten (H. Inoue, u. a., J. of Solid State Chem., 121, 1996, 190-196).

Als Katalysatormaterialien wurden BaMnAl$_{11}$O$_{19-\alpha}$ (BMA) und Sr$_{0,8}$La$_{0,2}$MnAl$_{11}$O$_{19-\alpha}$ (SLMA) untersucht. Diese Katalysatormaterialien sind resistent gegen Versinterung bei Temperaturen > 1000 °C und gegen Verdampfung und Korrosion. Die spezifischen Oberflächen dieser Verbindungen liegen je nach Zusammensetzung im Bereich von 6,6 m$^2$/g (Gd-Mn-Aluminat) bis 20,8 m$^2$/g (Sr-Mn-Aluminat).

Ebenso sind aus der Literatur (H. Inoue, u.a., Journal of Material Science 32 (1997) 4627-4632) Untersuchungen zu Hexaaluminat-Katalysator-Dickschichten auf planen keramischen Substraten für die Hochtemperatur-Verbrennung bekannt. Die angegebenen Hexaaluminate weisen einen hohen Syntheseaufwand auf, um diese phasenreinen substitutierten Aluminate zu erreichen. Weiterhin ist die thermomechanische Beständigkeit dieser Hexaaluminate für technische Anwendungen auch nicht ausreichend.

Weiterhin sind Calciumhexaaluminate für Hochtemperaturanwendungen in der Feuerfestindustrie bekannt (D. van Garsel, u.a. UNITECR'99-Proceedings, 6th Biennial Worldwide Congress in conjunction with the 42nd Intern. Colloquium on Refractories, "Refractories 2000", Berlin, 6.-9.9.1999, S. 181 - 186 und A. Buhr: Technisches Paper der Firma Almatis). Diese sind auch käuflich erwerbbar und werden beispielsweise als Wärmeisolationsmaterialien im Brennofenbau eingesetzt. Derartige Materialien sind mikroporös bis dicht und sind resistent gegenüber einer Vielzahl korrosiver Materialien.

Jedoch weisen sie eine geringe spezifische Oberfläche von maximal 2 m$^2$/g auf. Nachteilig ist weiterhin, dass durch die hohe Wärmedehnung des Calciumhexaaluminates von 8*10$^{-6}$ K$^{-1}$ und geringe Wärmeleitfähigkeit von 0,4 W/mK die thermomechanische Beständigkeit relativ gering ist.

Nachteilig bei den Lösungen des Standes der Technik ist, dass kein Katalysatormaterial und kein Katalysatorträgermaterial für Hochtemperaturanwendungen vorhanden ist, welches gleichzeitig eine hohe thermomechanische Beständigkeit und eine hohe spezifische Oberfläche aufweist.

Die Aufgabe der vorliegenden Erfindung besteht in der Angabe eines zellulären Werkstoffs für Hochtemperaturanwendungen >1000°C, welcher gleichzeitig eine hohe thermomechanische Beständigkeit und eine hohe spezifische Oberfläche aufweist, und in der Angabe eines einfachen und kostengünstigen Verfahrens mit geringem Syntheseaufwand zur Herstellung derartiger zellulärer Werkstoffe.

Die Aufgabe wird durch die in den Ansprüchen angegebene Erfindung gelöst. Vorteilhafte Ausgestaltungen sind Gegenstand der Unteransprüche.

Der erfindungsgemäße zelluläre Werkstoff für Hochtemperaturanwendungen besteht aus einem zellulären Träger aus einem thermomechanisch stabilen Material, dessen umhüllende Oberfläche mit mindestens einer Schicht bedeckt ist, die mindestens 95 Masse-% aus Calcium-Aluminiumoxid-Verbindungen enthält, die mindestens 75 Masse-% an einer aluminiumreichen Calcium-Aluminiumoxid-Verbindung enthält und die aluminiumreiche Calcium-Aluminiumoxid-Verbindung mindestens 86 Masse-% Aluminiumoxid enthält und maximal 0,1 Masse-% einer Si-Verbindung enthält.

Vorteilhafterweise besteht der zelluläre Träger aus SiC, $Si_3N_4$, Mullit, Cordierit und/oder $Al_2O_3$ oder aus metallischen Hochtemperaturlegierungen, die noch vorteilhafterweise austenitische Cr-Ni-Stähle oder Nickelbasislegierungen oder FeCrAl-Legierungen oder FeCrAlY-Legierungen sind.

Weiterhin vorteilhafterweise ist der zelluläre Träger ein offenzelliger Schaum oder ein Parallelkanalmonolith ist, wobei vorteilhafterweise der offenzellige Schaum eine mittlere Zellgröße von 8 - 60 ppi (pores per inch) (entspricht 3,1 - 23,6 Zellen pro cm) aufweist, und auch vorteilhafterweise der Parallelkanalmonolith mit Zellzahl von 20-600 cpsi (cells per square inch) (entspricht 3,1 - 93 Zellen pro $cm^2$) vorhanden ist, wobei noch vorteilhafterweise der Parallelkanalmonolith mit wellenförmigen, dreieckigen, viereckigen oder sechseckigen Kanalquerschnitten vorhanden ist. Ebenfalls vorteilhafterweise ist zwischen dem Träger und der Schicht aus den Calcium-Aluminiumoxid-Verbindungen mindestens eine weitere Schicht vorhanden, wobei noch vorteilhafterweise eine weitere Schicht vorhanden ist, deren Oberfläche nach der Aufbringung rau ist und einen Mittenrauwert Ra im Bereich von 3 - 15 $\mu$m und/oder eine Rautiefe Rz im Bereich von 20 - 100 $\mu$m aufweist, und noch vorteilhafterweise als weitere Schicht eine Mullitschicht vorhanden ist.

Von Vorteil ist es auch, wenn die Schicht 99 Masse-% aus Calcium-Aluminiumoxidverbindungen enthält.

Ebenfalls von Vorteil ist es, wenn die Calcium-Aluminiumoxidverbindungen mindestens 95 Masse-% an einer aluminiumoxidreichen Calcium-Aluminiumoxid-Verbindung enthalten.

Und auch von Vorteil ist es, wenn die aluminiumreiche Calcium-Aluminiumoxid-Verbindung 86 - 95 Masse- % $Al_2O_3$ und 14 - 5 Masse % CaO, noch vorteilhafterweise 91,5 Masse-% $Al_2O_3$ und 8,5 Masse-% CaO enthält.

Vorteilhaft ist es auch, wenn die Schicht aus den Calcium-Aluminiumoxid-Verbindungen eine Dicke von 10 bis 300 $\mu$m aufweist.

Und auch vorteilhaft ist es, wenn die spezifische Oberfläche der Schicht aus den Calcium-Aluminiumoxid-Verbindungen nach einer Temperaturbehandlung für 100 h bei Temperaturen $\leq$ 1000 °C $\geq$ 100 $m^2$/g und nach einer Temperaturbehandlung für 100 h bei Temperaturen > 1000 °C mindestens 5 $m^2$/g beträgt.

Bei dem erfindungsgemäßen Verfahren zur Herstellung eines zellulären Werkstoffes für Hochtemperaturanwendungen wird auf ein thermoschockbeständiges zelluläres Trägermaterial oder auf eine darauf befindliche Schicht mindestens einmal eine Suspension aufgebracht, die mindestens Aluminiumoxid- und Calciumoxid-Partikel oder Precursoren von Aluminiumoxid und/oder Calciumoxid oder Calcium-Aluminiumoxid-Partikel enthält und zu einer Schicht führt, die mindestens 95 Masse-% aus Calcium-Aluminiumoxid-Verbindungen enthält, die 75% an einer aluminiumreichen Calciumoxid-Aluminiumoxidverbindung enthält und die aluminiumreiche Calcium-Aluminiumoxid-Verbindung mindestens 86 Masse-% aus Aluminiumoxid enthält und maximal 0,1 Masse-% einer Si-Verbindung enthält, und der Schichtverbund in Abhängigkeit von der Einsatztemperatur bei jeweils mindestens 10 % höheren Temperaturen gesintert wird.

Vorteilhafterweise wird der Schichtverbund bei Temperaturen von 1000 bis 1300 °C gesintert wird.

Ebenfalls vorteilhafterweise wird auf das zelluläre Trägermaterial eine Suspension aufgebracht, die Keramik- und/oder Metallpulver mit einer mittleren Korngröße der Pulverpartikel von 5 - 150 $\mu$m enthält, danach die überschüssige Suspension entfernt, getrocknet und nachfolgend die Suspension für die Schicht aus den Calcium-Aluminiumoxid-Verbindungen aufgebracht wird, wobei nach dem Trocknen weitere Suspensionen aufgebracht werden können, wobei noch vorteilhafterweise auf die getrocknete Schicht aus Keramik- und/oder Metallpulvern eine weitere Suspension aufgebracht wird, die Mullitpartikel oder Precursoren von Mullit enthält, danach die überschüssige Suspension entfernt, getrocknet und nachfolgend die Suspension für die Schicht aus den Calcium-Aluminiumoxid-Verbindungen aufgebracht wird.

Weiterhin vorteilhafterweise wird auf das zelluläre Trägermaterial eine Suspension aufgebracht, die Mullitpartikel enthält, danach die überschüssige Suspension entfernt, getrocknet und nachfolgend die Suspension für die Schicht aus den Calcium-Aluminiumoxid-Verbindungen aufgebracht wird.

Und auch vorteilhafterweise wird als Keramikpulver SiC, $Si_3N_4$, $Al_2O_3$, Mullit, Cordierit, Ca-Aluminate, Ca-Alumosilikate und/oder Kombinationen dieser Materialien eingesetzt.

Vorteilhaft ist es auch, wenn als Metallpulver austenitische Cr-Ni-Stähle oder Nickelbasislegierungen oder FeCrAl-Legierungen oder FeCrAlY-Legierungen und/oder Kombinationen dieser Materialien eingesetzt wird.

Und auch vorteilhaft ist es, wenn als thermoschockbeständiges zelluläres Trägermaterial SiC, Si3N4, Mullit, Cordierit und/oder $Al_2O_3$ eingesetzt wird.

Ebenfalls vorteilhaft ist es, wenn ein Trägermaterial eingesetzt wird, welches ein offenzelliger Schaum oder ein Parallelkanalmonolith ist, wobei noch vorteilhafterweise ein offenzelliger Schaum eingesetzt wird, der eine mittlere Zellgröße von 8 - 60 ppi aufweist, und/oder ein Parallelkanalmonolith eingesetzt wird, der eine Zellzahl von 20-600 cpsi (cells per square inch) aufweist, wobei noch vorteilhafterweise ein Parallelkanalmonolith eingesetzt wird, der wellenförmige, dreieckige, viereckige oder sechseckige Kanalquerschnitte aufweist.

Mit der erfindungsgemäßen Lösung wird es erstmals möglich, einen gut thermomechanisch belastbaren zellulären Werkstoff für Hochtemperaturanwendungen anzugeben, der die guten Eigenschaften des thermomechanisch stabilen Trägermaterials mit der hohen spezifischen Oberfläche der Supportschicht aus den aluminiumreichen Calcium-Aluminiumoxid-Verbindungen verbindet.

Das Trägermaterial des zellulären Werkstoffs ist thermomechanisch stabil, d.h. es weist eine geringe Wärmedehnung und eine gute Wärmeleitfähigkeit und Hochtemperaturfestigkeit auf. Besonders eignen sich dafür zelluläre Träger aus Siliciumcarbid-, Mullit- und Cordieritkeramik.

Die umhüllende Oberfläche der Stege des erfindungsgemäßen zellulären Materials und der überwiegende Anteil der spezifischen Oberfläche wird von mindestens einer Schicht aus Calcium-Aluminiumoxid-Verbindungen gebildet. Ein besonderer Vorteil der erfindungsgemäßen Lösung ist die hohe spezifische Oberfläche der Schicht aus den Calcium-Aluminiumoxid-Verbindungen, die bei 1200 °C auch nach 100h bei mindestens 5 $m^2$/g, vorteilhafterweise bei 13 $m^2$/g liegt und bei Temperaturen bis 1000 °C nach 100h bei > 100 $m^2$/g. Es hat sich gezeigt, dass die hohe spezifische Oberfläche und Versinterungsresistenz der Schicht aus den Calcium-Aluminiumoxid-Verbindungen erst dann erreicht wird, wenn sie zu mindestens 95 Masse-% aus Calcium-Aluminiumoxidverbindungen besteht, und diese Verbindungen zu mindestens 75 Masse-% Calcium-Aluminiumoxidverbindungen mit einem sehr hohen Aluminiumoxidgehalt enthalten. Die aluminiumreichen Calcium-Aluminiumoxid-Verbindungen bestehen zu mindestens 86 Masse-% aus einer Aluminiumoxidverbindung, vorteilhafterweise aus $Al_2O_3$ und vorteilhafterweise zu 14 - 5 Masse-% aus CaO. Dabei darf der Gehalt an Verunreinigungen, insbesondere an Siliciumverbindungen, insbesondere $SiO_2$ maximal 0,1 Masse-% betragen. Vorteilhafterweise sollten keine Verunreinigungen enthalten sein.

Es ist vorteilhaft, wenn zwischen der Oberfläche des zellulären Trägers und der Schicht aus der aluminiumreichen Calcium-Aluminiumoxid-Verbindung mindestens eine Zwischenschicht auf den zellulären Träger aufgebracht ist, die dem Träger eine raue Oberfläche, vorteilhafterweise mit einem Mittenrauwert $R_a$ im Bereich 3 -15 $\mu$m und eine Rautiefe $R_z$ im Bereich von 20 - 100 $\mu$m verleiht. Die Schicht mit rauer Oberfläche wird durch Aufbringen einer Pulversuspension mit vergleichsweise groben Pulvern, vorteilhafterweise Keramik- und/oder Metallpulvern hergestellt. Die durchschnittliche Partikelgröße der Pulver beträgt dabei 5 - 150 $\mu$m. Vorteilhaft ist es, wenn die Partikel der rauen Schicht aus dem gleichen Material bestehen, wie das zelluläre Trägermaterial. Durch die raue Oberfläche dieser Schicht wird eine mechanische Verzahnung mit der nachfolgenden aluminiumreichen Calcium-Aluminiumoxid-Schicht erreicht und damit eine verbesserte Haftfestigkeit.

Weitere vorteilhafte Ausgestaltungen bestehen darin, größere Mengen an Calcium-Aluminiumoxid-Verbindungen aufzubringen und/oder die Schicht oder Schichten der Calcium-Aluminiumoxid-Verbindungen in sehr gleichmäßiger Schichtdicke aufzubringen.

Im Falle, dass das Trägermaterial und die Calcium-Aluminiumoxid-Verbindung eine Reaktion eingehen oder eingehen können, wird zwischen dem zellulären Träger bzw. der Schicht mit der rauen Oberfläche (wenn vorhanden) und der Schicht aus den Calcium-Aluminiumoxid-Verbindungen eine weitere Schicht eingefügt. Diese Schicht dient der Unterdrückung oder Verhinderung von kritischen Reaktionen zwischen dem Trägermaterial und den Calcium-Aluminiumoxid-Verbindungen.

Dies gilt insbesondere für siliciumreiche Verbindungen als Trägermaterialien, wie z.B. SiC, da sich bei Reaktionen zwischen dem bei hohen Temperaturen an der Oberfläche des SiC gebildeten $SiO_2$ und den Calcium-Aluminiumoxid-Verbindungen niedrig schmelzende Calciumalumosilicate bilden können. Im Fall der Verwendung von SiC als Trägermaterial ist der Einsatz einer Zwischenschicht aus Mullit (Aluminiumsilikat) vorteilhaft. Im Gegensatz zu der Schicht mit der rauen Oberfläche ist es vorteilhaft, wenn diese Schicht möglichst dicht und wenig porös ist.

Die Mullitschicht kann durch Aufbringen von Mullitpulvern oder/oder durch Aufbringung von Aluminium und Silicium enthaltenden Precursoren zur Bildung von Mullit erzeugt werden, z.B. durch Aufbringung von hochreaktivem Böhmit oder Gamma-Aluminiumoxid und Silicasol oder Silikonharzen. Für die Mullitbildung kann auch ein Teil des durch die Oxidation des SiC entstehenden $SiO_2$ genutzt werden.

Die Schicht aus Calcium-Aluminiumoxid-Verbindungen kann durch Aufbringung von sehr feinen, vorsynthetisierten Calcium-Aluminiumoxid-Pulvern und/oder durch Aufbringungen von Calcium und Aluminium enthaltenden Precursoren erzeugt werden, z.B. durch Aufbringung von Calciumcarbonat, von hochreaktivem Böhmit oder Gamma-Aluminiumoxid und/oder auch unter Verwendung von feinem Aluminiumpulver. Der hohe Anteil an aluminiumoxidreichen Calcium-Aluminiumverbindungen wird durch einen entsprechend hohen Anteil der das Aluminium enthaltenden Komponente erreicht. Dieser Zusammenhang ist dem Fachmann bekannt und er kann durch einfache Versuche für die jeweils eingesetzen Ausgangsstoffe den Aluminiumanteil bestimmen. Nach der Aufbringung der Pulver oder der Precursoren erfolgt eine Sinterung, wobei dann die erfindungsgemäße Schicht ausgebildet wird.

Das Aufbringen der Pulver auf das zelluläre Trägermaterial kann durch ein- oder mehrmaliges Tauchen oder Tränken des Trägermaterials in die Pulver- oder Precursorsuspension und anschließendes Abtropfen, Ausblasen, Absaugen, Abschleudern oder Abzentrifugieren der überschüssigen Suspension und anschließendes Trocknen erfolgen. Mit diesen Verfahren kann auch die jeweils gewünschte Schichtdicke erzeugt werden. Dabei kann durch den Fachmann die für den Anwendungsprozess optimale Schichtdicke leicht ermittelt werden.

Die erfindungsgemäße hochporöse Schicht aus den Calcium-Aluminiumoxidverbindung kann zum Erreichen oder zur Erhöhung einer katalytischen Wirkung mit bekannten Katalysatoren, z.B. Edelmetallen, wie Pt, Pd, Rh, Ir, Ru, und Übergangsmetallen, wie Fe, Ni, Mn, versehen werden. Das kann sowohl durch das Zumischen von Katalysatorpartikeln in die Beschichtungssuspension erreicht werden, als auch durch nachträgliche Beschichtung mit diesen Partikeln und/oder durch Tränkung mit löslichen Verbindungen dieser Katalysatoren und nachträgliches Calcinieren.

Es zeigen:

Figur 1: die Prinzipdarstellung eines zellulären Werkstoffes in Form eines offenzelligen Schaumes

Figur 2: die idealisierte Prinzipdarstellung der Elementarzelle des offenzelligen Schaumes aus Figur 1

Figur 3: die Prinzipdarstellung eines typischen Querschnitts eines Steges des offenzelligen Schaumes aus Figur 1

Figur 4: die Prinzipdarstellung eines zellulären Werkstoffes in Form eines Parallelkanalwabenkörpers

Figur 5: die Prinzipdarstellung der Elementarzelle des zellulären Werkstoffes aus Figur 4

Figur 6: die Prinzipdarstellung eines typischen Querschnitts der Stege des zellulären Werkstoffes aus Figur 4

Figur 7: die Prinzipdarstellung von umhüllender Oberfläche und innerer Oberfläche am Beispiel eines porösen Partikels

Nachfolgend ist die Erfindung an einem Ausführungsbeispiel näher erläutert.

Beispiel 1

Ein offenzelliger Schaum aus SiC mit der Abmessungen 40x40x20 mm$^3$ und einer Zellweite von 20ppi wird mit einer Suspension getränkt, die aus SiC-Pulver mit einer mittleren Korngröße von 23 $\mu$m und aus Wasser besteht. Die überschüssige Suspension wird durch Zentrifugieren entfernt, bis eine zusätzliche Masse von 4 g erreicht wird. Danach wird bei 120°C 60 min getrocknet und anschließend bei 2100°C unter Argon-Atmosphäre gesintert. Die Stärke der Schicht aus den groben Partikeln auf den Zellstegen des offenzelligen Schaumes beträgt im Mittel 80 $\mu$m. Die mittlere Rauigkeit $R_a$ beträgt 3,8 $\mu$m und die Rautiefe $R_z$ 21 $\mu$m. Nachfolgend wird der Schaumkörper mit einer Suspension, die aus Mullitpartikeln mit einer mittleren Korngröße von 5 $\mu$m und Wasser besteht, getränkt und überschüssige Suspension durch Zentrifugieren entfernt, bis eine zusätzliche Masse von 5 g erreicht wird. Danach wird erneut bei 120°C 60 min getrocknet und anschließend bei 1400°C an Luftatmosphäre gesintert. Anschließend wird eine Schicht aus einer Suspension von Calciumoxid (5 Masse-%) und Aluminiumoxid (95 Masse-%) mittels Eintauchen des Schaumkörpers in die Suspension aufgebracht, die überschüssige Menge an Suspension abzentrifugiert, bei 120°C 60 min getrocknet und danach der Schichtverbund bei 1230°C gesintert. Die letzte Schicht aus der aluminiumreichen Calciumaluminatschicht weist danach eine Schichtdicke von 50 $\mu$m auf. Sie besteht zu 98% aus Calcium-Aluminiumoxid, das zu 85% aus einer aluminiumreichen Calcium-Aluminiumverbindung mit einem Aluminiumgehalt von 91,5% besteht. Die spezifische Oberfläche der Schicht beträgt nach der Sinterung 23 m$^2$/g. Stücken der beschichteten Schaumkeramik weisen eine spezifische Oberfläche von 2m$^2$/g auf. Die Unterschiede in den Werten ergeben sich dadurch, dass eine hohe spezifische Oberfläche eine Eigenschaft der Schicht ist und nicht der offenzelligen Schaumkeramik. Wenn für eine erfindungsgemäß beschichtete Schaumkeramik die spezifische Oberfläche gemessen wird, so setzt sich der Betrag aus Beiträgen beider Komponenten zusammen, die proportional zu den Masse- oder Volumenanteilen sind.

Nach 100h Test im Abgas einer Methanverbrennung bei Luftzahl 1,2 und bei einer Temperatur von 1100°C beträgt die spezifische Oberfläche der Schicht immer noch 23 m$^2$/g.

Die thermomechanische Festigkeit dieses zellularen Werkstoffes wird wie folgt analysiert:

Nach 10-maligem Aufheizen auf 1200°C und anschließendem Abschrecken im Wasserbad ist der beschichtete Schaumkörper nicht zerstört. Die aufgebrachte Schicht haftet noch am Schaum. Im Vergleich dazu zerbricht ein zellularer Körper aus der reinen aluminiumreichen Calcium-Aluminiumoxid-Verbindung bereits bei diesem Test schon nach dem ersten Abschrecken.

Bezugszeichenliste

1    Schaumstege

2    umhüllende Oberfläche

3    Wabenstege

4    Innere Porenkanäle

**Patentansprüche**

1.  Zellulärer Werkstoff für Hochtemperaturanwendungen bestehend aus einem zellulären Träger aus einem thermomechanisch stabilen Material, dessen umhüllende Oberfläche mit mindestens einer Schicht bedeckt ist, die mindestens 95 Masse-% aus Calcium-Aluminiumoxid-Verbindungen enthält, die mindestens 75 Masse-% an einer aluminiumreichen Calcium-Aluminiumoxid-Verbindung enthält und die aluminiumreiche Calcium-Aluminiumoxid-Verbindung mindestens 86 Masse-% Aluminiumoxid enthält und maximal 0,1 Masse-% einer Si-Verbindung enthält.

2.  Zellulärer Werkstoff nach Anspruch 1, bei dem der zelluläre Träger aus SiC, $Si_3N_4$, Mullit, Cordierit und/oder $Al_2O_3$ oder aus metallischen Hochtemperaturlegierungen, w i e austenitische Cr-Ni-Stähle oder Nickelbasislegierungen oder FeCrAl-Legierungen oder FeCrAlY-Legierungen besteht.

3.  Zellulärer Werkstoff nach Anspruch 1, bei dem der zelluläre Träger ein offenzelliger Schaum oder ein Parallelkanalmonolith ist, wobei der offenzellige Schaum eine mittlere Zellgröße von 8 - 60 ppi (pores per inch) aufweist und/oder der Parallelkanalmonolith mit einer Zellzahl von 20-600 cpsi (cells per square inch) vorhanden ist, wobei der Parallelkanalmonolith mit wellenförmigen, dreieckigen, viereckigen oder sechseckigen Kanalquerschnitten vorhanden ist..

4.  Zellulärer Werkstoff nach Anspruch 1, bei dem zwischen dem Träger und der Schicht aus den Calcium-Aluminiumoxid-Verbindungen mindestens eine weitere Schicht vorhanden ist, wobei die Oberfläche der weiteren Schicht nach der Aufbringung rau ist und einen Mittenrauwert Ra im Bereich von 3 - 15 $\mu$m und/oder eine Rautiefe Rz im Bereich von 20 - 100 $\mu$m aufweist, und vorteilhafterweise die weitere Schicht eine Mullitschicht ist.

5.  Zellulärer Werkstoff nach Anspruch 1, bei dem die Schicht 99 Masse-% Calcium-Aluminiumoxidverbindungen enthält.

6.  Zellulärer Werkstoff nach Anspruch 1 , bei dem die Calcium-Aluminiumoxidverbindungen mindestens 95 Masse-% an einer aluminiumoxidreichen Calcium-Aluminiumoxid-Verbindung enthalten.

7.  Zellulärer Werkstoff nach Anspruch 1, bei dem die aluminiumreiche Calcium-Aluminiumoxid-Verbindung 86 - 95 Masse- % $Al_2O_3$, vorteilhafterweise 91,5 Masse-% $Al_2O_3$, und 14 - 5 Masse % CaO, vorteilhafterweise 8,5, Masse-% CaO, enthält.

8.  Zellulärer Werkstoff nach Anspruch 1, bei dem die Schicht aus den Calcium-Aluminiumoxid-Verbindungen eine Dicke von 10 bis 300 $\mu$m aufweist.

9.  Zellulärer Werkstoff nach Anspruch 1, bei dem die spezifische Oberfläche der Schicht aus den Calcium-Aluminiumoxid-Verbindungen nach einer Temperaturbehandlung für 100 h bei Temperaturen $\leq$ 1000 °C $\geq$ 100 m$^2$/g und nach einer Temperaturbehandlung für 100 h bei Temperaturen > 1000 °C mindestens 5 m$^2$/g beträgt.

10. Verfahren zur Herstellung eines zellulären Werkstoffes für Hochtemperaturanwendungen, bei dem auf ein thermoschockbeständiges zelluläres Trägermaterial oder auf eine darauf befindliche Schicht mindestens einmal eine Suspension aufgebracht wird, die mindestens Aluminiumoxid- und Calciumoxid-Partikel oder Precursoren von Aluminiumoxid und/oder Calciumoxid oder Calcium-Aluminiumoxid-Partikel enthält und zu einer Schicht führt, die mindestens 95 Masse-% Calcium-Aluminiumoxid-Verbindungen enthält, die mindestens 75% an einer aluminiumreichen Calciumoxid-Aluminiumoxidverbindung enthält und die aluminiumreiche Calcium-Aluminiumoxid-Verbindung mindestens 86 Masse-% aus Aluminiumoxid enthält und maximal 0,1 Masse-% einer Si-Verbindung enthält, und der Schichtverbund in Abhängigkeit von der Einsatztemperatur bei jeweils mindestens 10 % höheren Temperaturen gesintert wird.

11. Verfahren nach Anspruch 10, bei dem der Schichtverbund bei Temperaturen von 1000 bis 1300 °C gesintert wird.

12. Verfahren nach Anspruch 10, bei dem auf das zelluläre Trägermaterial eine Suspension aufgebracht wird, die Keramik- und/oder Metallpulver mit einer mittleren Korngröße der Pulverpartikel von 5 - 150 $\mu$m enthält, danach die überschüssige Suspension entfernt, getrocknet und nachfolgend die Suspension für die Schicht aus den Calcium-Aluminiumoxid-Verbindungen aufgebracht wird, wobei nach dem Trocknen weitere Suspensionen aufgebracht werden können, wobei vorteilhafterweise auf die getrocknete Schicht aus Keramik- und/oder Metallpulvern eine weitere Suspension aufgebracht wird, die Mullitpartikel oder Precursoren von Mullit enthält, danach die überschüssige Suspension entfernt, getrocknet und nachfolgend die Suspension für die Schicht aus den Calcium-Aluminiumoxid-Verbindungen aufgebracht wird.

13. Verfahren nach Anspruch 10, bei dem auf das zelluläre Trägermaterial eine Suspension aufgebracht wird, die Mullitpartikel enthält, danach die überschüssige Suspension entfernt, getrocknet und nachfolgend die Suspension für die Schicht aus den Calcium-Aluminiumoxid-Verbindungen aufgebracht wird.

14. Verfahren nach Anspruch 10, bei dem als Keramikpulver SiC, $Si_3N_4$, $Al_2O_3$, Mullit, Cordierit, Ca-Aluminate, Ca-Alumosilikate und/oder Kombinationen dieser Materialien eingesetzt wird.

15. Verfahren nach Anspruch 10, bei dem als Metallpulver austenitische Cr-Ni-Stähle oder Nickelbasislegierungen oder FeCrAl-Legierungen oder FeCrAlY-Legierungen und/oder Kombinationen dieser Materialien eingesetzt wird.

16. Verfahren nach Anspruch 10, bei dem als thermoschockbeständiges zelluläres Trägermaterial SiC, Si3N4, Mullit, Cordierit und/oder $Al_2O_3$ eingesetzt wird.

17. Verfahren nach Anspruch 10, bei dem ein Trägermaterial eingesetzt wird, welches ein offenzelliger Schaum, vorteilhafterweise mit einer mittleren Zellgröße von 8 - 60 ppi, oder ein Parallelkanalmonolith, vorteilhafterweise mit einer Zellzahl von 20-600 cpsi (cells per square inch) ist, wobei auch vorteilhafterweise ein eingesetzter Parallelkanalmonolith wellenförmige, dreieckige, viereckige oder sechseckige Kanalquerschnitte aufweist..

**Claims**

1. Cellular material for high-temperature applications, which consists of a cellular support which is composed of a thermomechanically stable material and whose enclosing surface is covered with at least one layer which contains at least 95% by mass of calcium-aluminium oxide compounds and contains at least 75% by mass of an aluminium-rich calcium-aluminium oxide compound, where the aluminium-rich calcium-aluminium oxide compound contains at least 86% by mass of aluminium oxide and not more than 0.1% by mass of an Si compound.

2. Cellular material according to Claim 1, wherein the cellular support consists of SiC, $Si_3N_4$, mullite, cordierite and/or $Al_2O_3$ or of metallic high-temperature alloys such as austenitic Cr-Ni steels or nickel-based alloys or FeCrAl alloys or FeCrAlY alloys.

3. Cellular material according to Claim 1, wherein the cellular support is an open-celled foam or a parallel channel monolith, where the open-cell foam has an average cell size of 8-60 ppi (pores per inch) and/or the parallel channel monolith has a cell count of 20-600 cpsi (cells per square inch), where the parallel channel monolith has wave-shaped, triangular, quadrilateral or hexagonal channel cross sections.

4. Cellular material according to Claim 1, wherein at least one further layer is present between the support and the layer of the calcium-aluminium oxide compounds, where the surface of the further layer after the application is rough and has an average roughness Ra in the range 3-15 $\mu$m and/or a peak-to-valley height Rz in the range 20-100 $\mu$m and the further layer is advantageously a mullite layer.

5. Cellular material according to Claim 1, wherein the layer contains 99% by mass of calcium-aluminium oxide compounds.

6. Cellular material according to Claim 1, wherein the calcium-aluminium oxide compounds contain at least 95% by mass of an aluminium oxide-rich calcium-aluminium oxide compound.

7. Cellular material according to claim 1, wherein the aluminium-rich calcium-aluminium oxide compound contains 86-95% by mass of $Al_2O_3$, advantageously 91.5% by mass of $Al_2O_3$, and 14-5% by mass of CaO, advantageously 8.5% by mass of CaO.

8. Cellular material according to Claim 1, wherein the layer composed of the calcium-aluminium oxide compounds has a thickness of from 10 to 300 $\mu$m.

9. Cellular material according to Claim 1, wherein the specific surface area of the layer composed of the calcium-aluminium oxide compounds after a heat treatment at temperatures of $\leq$ 1000°C for 100 hours is $\geq$ 100 $m^2$/g and after a heat treatment at temperatures of > 1000°C for 100 hours is at least 5 $m^2$/g.

10. Process for producing a cellular material for high-temperature applications, wherein a suspension which contains at least aluminium oxide and calcium oxide particles or precursors of aluminium oxide and/or calcium oxide or calcium-aluminium oxide particles and leads to a layer which contains at least 95% by mass of calcium-aluminium oxide compounds and contains at least 75% of an aluminium-rich calcium oxide-aluminium oxide compound, where the aluminium-rich calcium-aluminium oxide compound contains at least 86% by mass of aluminium oxide and not more than 0.1% by mass of an Si compound, is applied at least once to a thermal shock-resistant cellular support material or to a layer present thereon and the layer composite is sintered at temperatures which are at least 10% higher than the use temperature.

**11.** Process according to Claim 10, wherein the layer composite is sintered at temperatures of from 1000 to 1300°C.

**12.** Process according to Claim 10, wherein a suspension containing ceramic and/or metal powder having an average particle size of the powder particles of 5-150 $\mu$m is applied to the cellular support material, the excess suspension is then removed, the layer composite is dried and the suspension for the layer composed of the calcium-aluminium oxide compounds is subsequently applied, where further suspensions can be applied after drying, where a further suspension containing mullite particles or precursors of mullite is advantageously applied to the dried layer of ceramic and/or metal powders, the excess suspension is then removed, the layer composite is dried and the suspension for the layer composed of the calcium-aluminium oxide compounds is subsequently applied.

**13.** Process according to Claim 10, wherein a suspension containing mullite particles is applied to the cellular support material, the excess suspension is then removed, the layer composite is dried and the suspension for the layer composed of the calcium-aluminium oxide compounds is subsequently applied.

**14.** Process according to Claim 10, wherein SiC, $Si_3N_4$, $Al_2O_3$, mullite, cordierite, Ca aluminates, Ca aluminosilicates and/or combinations of these materials are used as ceramic powder.

**15.** Process according to Claim 10, wherein austenitic Cr-Ni steels or nickel-based alloys or FeCrAl alloys or FeCrAlY alloys and/or combinations of these materials are used as metal powder.

**16.** Process according to Claim 10, wherein SiC, $Si_3N_4$, mullite, cordierite and/or $Al_2O_3$ is used as thermal shock-resistant cellular support material.

**17.** Process according to Claim 10, wherein a support material which is an open-celled foam, advantageously having an average cell size of 8-60 ppi, or a parallel channel monolith, advantageously having a cell count of 20-600 cpsi (cells per square inch) is used, where a parallel channel monolith used advantageously has wave-shaped, triangular, quadrilateral or hexagonal channel cross sections.

## Revendications

**1.** Matériau cellulaire pour applications à hautes températures, consistant en un support cellulaire à base d'une matière thermomécaniquement stable dont la surface à enrober est recouverte d'au moins une couche qui contient au moins 95 % en masse de composés de type oxyde d'aluminium-calcium, qui contient au moins 75 % en masse d'un composé de type oxyde d'aluminium-calcium riche en aluminium et le composé de type oxyde d'aluminium-calcium riche en aluminium contient au moins 86 % en masse d'oxyde d'aluminium et au maximum 0,1 % en masse d'un composé de Si.

**2.** Matériau cellulaire selon la revendication 1, dans lequel le support cellulaire consiste en SiC, $Si_3N_4$, mullite, cordiérite et/ou $Al_2O_3$ ou en des alliages métalliques haute température tels que des aciers au Cr-Ni austénitiques ou des alliages à base de nickel ou des alliages FeCrAl ou des alliages FeCrAlY.

**3.** Matériau cellulaire selon la revendication 1, dans lequel le support cellulaire est une mousse à cellules ouvertes ou un monolithe à canaux parallèles, la mousse à cellules ouvertes présentant une taille moyenne de cellule de 8 - 60 ppi (pores par pouce) et/ou le monolithe à canaux parallèles étant présent avec un nombre de cellules de 20-600 cpsi (cellules par pouce carré), le monolithe à canaux parallèles étant présent avec des sections transversales de canaux ondulées, triangulaires, tétragonales ou hexagonales.

**4.** Matériau cellulaire selon la revendication 1, dans lequel entre le support et la couche à base des composés de type oxyde d'aluminium-calcium est présente au moins une autre couche, la surface de l'autre couche étant rugueuse après l'application et présentant une rugosité moyenne Ra dans la plage de 3 - 15 $\mu$m et/ou une profondeur de rugosité Rz dans la plage de 20 - 100 $\mu$m, et l'autre couche étant avantageusement une couche de mullite.

**5.** Matériau cellulaire selon la revendication 1, dans lequel la couche contient 99 % en masse de composés de type oxyde d'aluminium-calcium.

**6.** Matériau cellulaire selon la revendication 1, dans lequel les composés de type oxyde d'aluminium-calcium contiennent au moins 95 % en masse d'un composé de type oxyde d'aluminium-calcium riche en oxyde d'aluminium.

7. Matériau cellulaire selon la revendication 1, dans lequel le composé de type oxyde d'aluminium-calcium riche en aluminium contient 86 - 95 % en masse d'$Al_2O_3$, avantageusement 91,5 % en masse d'$Al_2O_3$, et 14 - 5 % en masse de CaO, avantageusement 8,5 % en masse de CaO.

8. Matériau cellulaire selon la revendication 1, dans lequel la couche à base des composés de type oxyde d'aluminium-calcium présente une épaisseur de 10 à 300 $\mu$m.

9. Matériau cellulaire selon la revendication 1, dans lequel la surface spécifique de la couche à base des composés de type oxyde d'aluminium-calcium est $\geq$ 100 $m^2/g$ après un traitement thermique pendant 100 h à des températures $\leq$ 1 000 °C et d'au moins 5 $m^2/g$ après un traitement thermique pendant 100 h à des températures > 1 000 °C.

10. Procédé pour la production d'un matériau cellulaire pour applications à hautes températures, dans lequel on applique sur une matière cellulaire de support résistante au choc thermique ou sur une couche se trouvant sur celle-ci au moins une fois une suspension qui contient au moins des particules d'oxyde d'aluminium et d'oxyde de calcium ou des précurseurs d'oxyde d'aluminium et/ou d'oxyde de calcium ou des particules d'oxyde d'aluminium-calcium et conduit à une couche qui contient au moins 95 % en masse de composés de type oxyde d'aluminium-calcium, qui contient au moins 75 % en masse d'un composé de type oxyde d'aluminium-calcium riche en aluminium et le composé de type oxyde d'aluminium-calcium riche en aluminium contient au moins 86 % en masse d'oxyde d'aluminium et au maximum 0,1% en masse d'un composé de Si, et on soumet à un frittage le composite de couches, en fonction de la température d'utilisation, à chaque fois des températures supérieures d'au moins 10 %.

11. Procédé selon la revendication 10, dans lequel le composite de couches est fritté à des températures de 1 000 à 1 300 °C.

12. Procédé selon la revendication 10, dans lequel on applique sur la matière cellulaire de support une suspension qui contient une poudre métallique et/ou céramique ayant une taille moyenne de grain des particules de poudre de 5 - 150 $\mu$m, puis on élimine la suspension en excès, on sèche et ensuite on applique la suspension pour la couche à base des composés de type oxyde d'aluminium-calcium, d'autres suspensions pouvant être appliquées après le séchage, sur la couche séchée de poudres métalliques et/ou céramiques étant avantageusement appliquée une autre suspension qui contient des particules de mullite ou des précurseurs de mullite puis on élimine la suspension en excès, on sèche et ensuite on applique la suspension pour la couche à base des composés_ de type oxyde d'aluminium-calcium.

13. Procédé selon la revendication 10, dans lequel on applique sur la matière cellulaire de support une suspension qui contient des particules de mullite, puis on élimine la suspension en excès, on sèche et ensuite on applique la suspension pour la couche à base des composés de type oxyde d'aluminium-calcium.

14. Procédé selon la revendication 10, dans lequel on utilise comme poudre céramique SiC, $Si_3N_4$, $Al_2O_3$, la mullite, la cordiérite, des aluminates de Ca, des aluminosilicates de Ca et/ou des associations de ces matières.

15. Procédé selon la revendication 10, dans lequel on utilise comme poudre métallique des aciers au Cr-Ni austénitiques ou des alliages à base de nickel ou des alliages FeCrAl ou des alliages FeCrAlY et/ou des associations de ces matières.

16. Procédé selon la revendication 10, **caractérisé en ce qu'**on utilise comme matière cellulaire de support résistante au choc thermique SiC, $Si_3N_4$, la mullite, la cordiérite et/ou $Al_2O_3$.

17. Procédé selon la revendication 10, dans lequel on utilise une matière de support qui est une mousse à cellules ouvertes, avantageusement ayant une taille moyenne de cellule de 8 - 60 ppi, ou un monolithe à canaux parallèles, avantageusement ayant un nombre de cellules de 20-600 cpsi (cellules par pouce carré), également avantageusement un monolithe à canaux parallèles utilisé présentant une section transversale de canaux ondulée, triangulaire, tétragonale ou hexagonale.

1

Fig. 1

1

Fig. 2

2

Fig. 3

Fig. 4

3

Fig. 5

2

3

Fig. 6

Fig. 7

**EP 2 373 418 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 3540449 A1
- WO 2006125648 A2
- DE 3735033 A1
- DE 2339513 C2
- DE 3223500 A1
- EP 0199509 A2

### In der Beschreibung aufgeführte Nicht-Patentliteratur

- 1.1 Cellular Solids - Scaling of Properties, Abschnitt 1.1.2 Cellular or ''Lattice'' Materials von Michael F. Ashby. Cellular Ceramics: Structure, Manufacturing, Properties and Applications. Wiley-VCH Verlag GmbH & Co. KGaA, 4
- Heterogeneous Catalysis and Solid Catalysts. **H. KNÖZINGER ; K. KOCHLOEFL.** Ullmann's Encyclopedia of Industrial Chemistry. Wiley&Sons, 2008
- **FERDI SCHÜTH.** Schlüsseltechnologie der chemischen Industrie - Heterogene Katalyse. *Chem. Unserer Zeit,* 2006, vol. 40, 92-103
- **REITZMANN, A.** *Chemie Ingenieur Technik,* 2006, vol. 78 (7
- **H. INOUE.** *J. of Solid State Chem.,* 1996, vol. 121, 190-196
- **H. INOUE.** *Journal of Material Science,* 1997, vol. 32, 4627-4632
- **D. VAN GARSEL.** UNITECR'99-Proceedings, 6th Biennial Worldwide Congress in conjunction with the 42nd Intern. Colloquium on Refractories. *Refractories 2000,* 06. September 1999, 181-186

15